# EUROPÄISCHE PATENTSCHRIFT

(11) **EP 0 989 921 B1**
(45) Veröffentlichungstag und Bekanntmachung des Hinweises auf die Patenterteilung: **21.03.2001**
(21) Anmeldenummer: 98937468.1
(22) Anmeldetag: 10.06.1998
(51) Int. Cl.: B23K 26/14

(54) **DÜSENANORDNUNG FÜR DAS LASERSTRAHLSCHNEIDEN**
NOZZLE SYSTEM FOR LASER BEAM CUTTING
SYSTEME D'AJUTAGE POUR DECOUPAGE AU LASER

(30) Priorität: 13.06.1997 DE 19725256
(43) Veröffentlichungstag der Anmeldung: 05.04.2000
(73) Patentinhaber: LT ULTRA-PRECISION-TECHNOLOGY GmbH, 88634 Aftholderberg (DE)
(72) Erfinder: BISCHOF, Dietmar, D-88697 Bermatingen (DE)
(74) Vertreter: Weiss, Peter, Dr.
(86) Internationale Anmeldenummer: EP9803511
(87) Internationale Veröffentlichungsnummer: WO9856534

(56) Entgegenhaltungen:
- EP-A- 0 294 324
- WO-A-95/00282
- DE-A- 3 630 127
- DE-A- 4 234 788
- DE-A- 4 402 000
- DE-A- 4 437 795
- US-A- 4 090 572
- PATENT ABSTRACTS OF JAPAN vol. 011, no. 158 (M-591), 22. Mai 1987 & JP 61 289992 A (INOUE JAPAX RES INC), 19. Dezember 1986

## Beschreibung

Die Erfindung betrifft eine Düsenanordnung für das Laserstrahlschneiden mit einem einen fokussierten Laserstrahl umgebenden Düsenkörper mit einer Durchlassöffnung für den Laserstrahl und mit einer den Düsenkörper umgebenden Düsenhülse, die mit dem Düsenkörper einen Ringspalt ausbildet, der einerseits einen Einlass für ein Gas und andererseits eine der Durchlassöffnung zugeordnete Ringöffnung aufweist.

Um bspw. Werkstücke mit hoher Arbeitsgeschwindigkeit mittels eines Laserstrahls schneiden zu können, ist es zum Ausblasen des Materials aus der Schneidfuge bekannt, ein Schneidgas zu verwenden, das mit hoher Geschwindigkeit zugeführt wird. Dabei liegt die Schneidgasgeschwindigkeit im Überschallbereich. Aus der DE 36 30 127 A1 ist eine solche Düsenanordnung für das Laserstrahlschneiden bekannt, die einen dem fokussierten Laserstrahl angepassten, diesen umgebenden kegelstumpfförmigen Düsenkörper mit einer Durchlassöffnung für den Laserstrahl hat und die eine den Düsenkörper konzentrisch umgebende Düsenhülse aufweist, welche mit dem Düsenkörper mehrere an eine Gasquelle angeschlossene Gasströmungskanäle bildet, die werkstückseitig von der Durchlassbohrung für den Laserstrahl in eine von dem Düsenkörper und von der Düsenhülse gemeinsam gebildete Vereinigungskammer münden, von der aus ein einziger Gasstrahl durch eine Austrittsbohrung bei entsprechender Bemessung des Drucks des Gases mit Überschallgeschwindigkeit ausströmt.

Ferner ist aus der DE 44 02 000 A1 eine Düsenanordnung der o. g. Art bekannt, bei welcher der Austrittsquerschnitt der Austrittsbohrung praktisch gleich dem Übergangsquerschnitt des Ringspaltes zur Austrittsbohrung ist. Dabei soll der Übergangsquerschnitt des Ringspalts derart bemessen sein, dass das Gas höchstens auf Schallgeschwindigkeit beschleunigt wird.

Die EP 0 294 324 beschreibt eine Düsenanordnung gemäss dem Oberbegriff des Anspruchs 1.

Der vorliegenden Erfindung liegt die Aufgabe zugrunde, eine Düsenanordnung der o. g. Art zu schaffen, bei welcher sowohl der Zusammenbau der Düsenanordnung und ihrem Anbringen an einem Laserkopf erleichtert und die Führung des Schutzgas-stromes verbessert ist.

Diese Aufgabe wird mit einer Düsenanordnung gemäss dem Anspruch 1 gelöst.

Zur Lösung dieser Aufgabe führt, dass im Ringspalt eine düsenartige Engstelle vorgesehen ist, wobei die Breite des Ringspalts vor und nach der Engstelle erhöht ist.

Diese düsenartige Engstelle hat den Vorteil, dass ein Venturieffekt innerhalb des Ringspaltes erzielt wird, der zu einer wesentlichen Erhöhung der Strömungsgeschwindigkeit führt. Dabei kann die Strömungsgeschwindigkeit ggf. grösser als die Schallgeschwindigkeit sein. Hierdurch wird gewährleistet, dass bspw. im Schneidspalt noch anhaftende Schlakke vom Schneiden her weggeblasen wird und dadurch eine wesentliche Vergütung des Schneidspaltes stattfindet.

Gleichzeitig erfolgt auch eine schnellere Kühlung des Schneidspaltes, was ebenfalls zu einer Verbesserung der Oberfläche führt. Zusätzlich wird gewährleistet, dass ein Sauerstoffzutritt zu dem Schneidspalt unterbunden und damit eine Oxidation beim Schneiden von Metall verhindert wird.

Ein weiterer wesentlicher Vorteil liegt darin, dass der Gasverbrauch vermindert wird, obwohl es gleichzeitig zu einer Erhöhung der Gasgeschwindigkeit kommt. Somit kann der Druck, mit dem das Gas zugeführt wird, ebenfalls vermindert werden.

In der Regel dürfte es sich als ratsam erweisen, die Engstelle ringförmig auszugestalten. Dies kann vor allem dadurch erfolgen, dass entweder die Aussenfläche des Düsenkörpers bombiert ist oder aber von einer Innenfläche der Düsenhülse eine wallartige Erhebung aufragt.

Die Engstelle sollte so ausgestaltet sein, dass eine Breite des Ringspaltes vor und nach der Engstelle erhöht ist. Das bedeutet, dass sich das Gas nach der Engstelle geringfügig entspannt.

Der Zusammenbau der Düsenanordnung ist zum einen dadurch erleichtert, dass in dem Ringspalt zwischen Düsenkörper und Düsenhülse Abstandhalter vorgesehen sind. Bevorzugt handelt es sich dabei um längsverlaufende Rippen, die der Aussenfläche des Düsenkörpers und/oder der Innenfläche der Düsenhülse aufgesetzt bzw. aus diesen Flächen ausgeformt sind.

Dem einfachen Zusammenbau dient auch eine Überwurfmutter, mittels welcher die Düsenanordnung an einem Laserkopf, bspw. einer Traghülse festgelegt werden kann. Ein Innenflansch der Überwurfmutter schlägt dabei an einer Ringschulter der Düsenhülse an, während die Überwurfmutter insgesamt einem Aussengewinde der Traghülse aufgeschraubt wird.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 einen Querschnitt durch einen Teil eines Laserkopfes;
Figur 2 einen Querschnitt durch eine Düsenanordnung des Laserkopfes gemäss Figur 1 entlang Linie II-II;

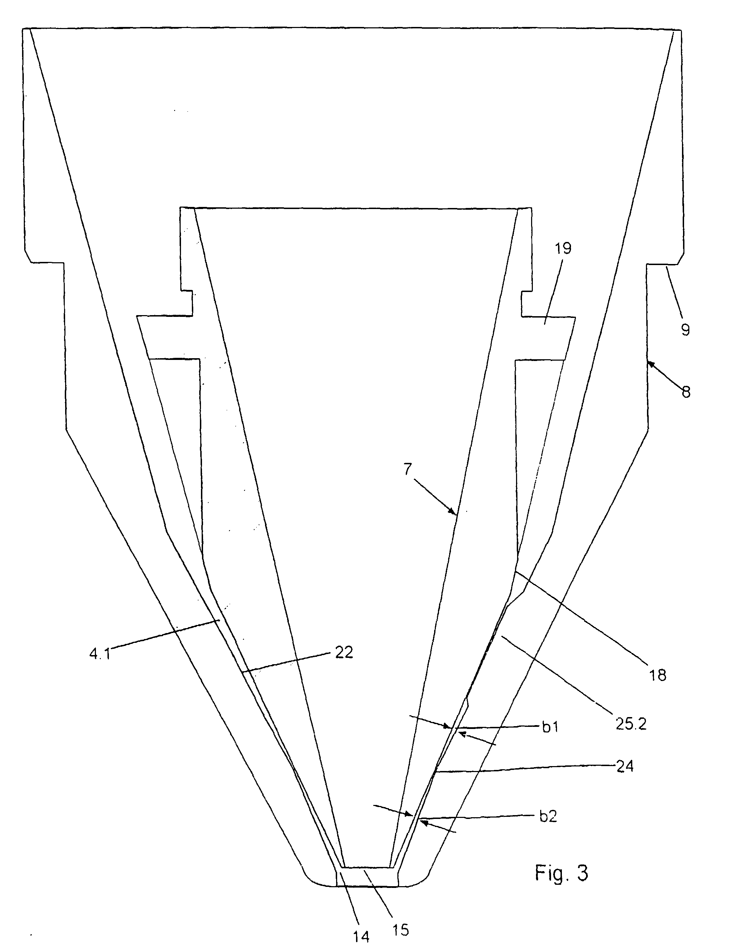

Figur 3 einen vergrössert dargestellten Querschnitt durch eine erfindungsgemässe Düsenanordnung an dem Laserkopf gemäss Figur 1.

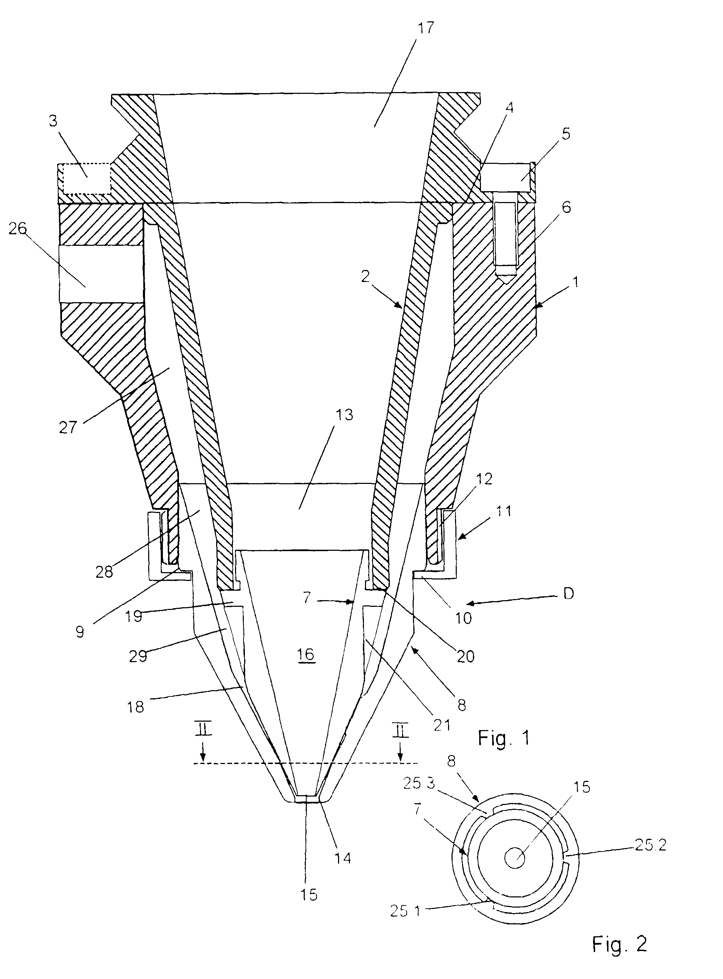

Von einem Laserkopf ist in Figur 1 eine Traghülse 1 gezeigt, die eine Innenhülse 2 umfängt. Dabei bildet die Innenhülse 2 einen Ringflansch 3 aus, an den ein oberer Rand 4 der Traghülse 1 anschlägt. Die Traghülse 1 ist über Schraubenbolzen 5 an diesem Ringflansch 3 festgelegt, wobei die Schraubenbolzen 5 in Gewindebohrungen 6 der Traghülse 1 eingesetzt sind.

An der Traghülse 1 ist eine Düsenanordnung D festgelegt. Diese Düsenanordnung D weist einen Düsenkörper 7 auf, der zumindest teilweise von einer Düsenhülse 8 umfangen ist. Die Düsenhülse 8 besitzt eine Ringschulter 9, gegen welche ein Innenflansch 10 einer Überwurfmutter 11 drückt, wobei die Überwurfmutter 11 einem Aussengewinde 12 der Traghülse 1 aufgeschraubt ist.

Die Düsenhülse 8 besitzt eine konisch geformte Innenfläche 13, welche sich zu einer Ringöffnung 14 hin verjüngt. Dieser Ringöffnung 14 ist eine Durchlassöffnung 15 für einen nicht näher gezeigten Laserstrahl in dem Düsenkörper 7 zugeordnet.

Im Düsenkörper 7 schliesst an die Durchlassöffnung 15 eine kegelstumpfförmige Innenfläche 16 an, die andererseits der Durchlassöffnung 15 in eine sich ebenfalls erweiternde Öffnung 17 in der Innenhülse 2 übergeht. Die Öffnung 17 und eine von der Innenfläche 16 umschlossene Öffnung in dem Düsenkörper 7 sind so ausgestaltet, dass ein nicht näher gezeigter Laserstrahl durch die Öffnung 17, durch den Düsenkörper 7 und durch die Durchlassöffnung 15 geleitet wird.

Einer Aussenfläche 18 des Düsenkörpers 7 ist nahe dem Übergang zur Öffnung 17 ein Aussenflansch 19 angeformt, der sich in Gebrauchslage gegen eine Ringkante 20 der Innenhülse 2 abstützt. Unterhalb des Aussenflansches 19 sind in die Aussenfläche 18 des Düsenkörpers 7 Ausnehmungen 21 eingeformt, die unter anderem der Leitung eines Schutzgasstromes dienen. Unterhalb der Ausnehmungen 21 beginnt ein zwischen der Aussenfläche 18 und einer Innenfläche 22 der Düsenhülse 8 ausgebildete Ringspalt. In diesen Ringspalt ist eine Engstelle 24 vorgesehen, die als wallartige und ringförmige Innenausbauchung der Innenfläche 22 ausgestaltet ist. Eine Breite b₁ und eine Breite b₂ des Ringspaltes vor und nach der Engstelle 24 sind grösser als die Breite der Engstelle 24 selbst.

Ferner erheben sich von der Innenfläche 22 der Düsenhülse 8 längsverlaufende Abstandhalter 25, die als Rippen ausgebildet sind. In Figur 2 ist erkennbar, dass drei derartige Abstandhalter 25.1. bis 25.3 vorgesehen sind.

Die Funktionsweise der vorliegenden Erfindung ist folgende:

Die Düsenanordnung D kann auf einfache Art und Weise mittels der Überwurfmutter 11 an den Laserkopf angesetzt werden.

Dabei wird der Düsenkörper 7 in die Düsenhülse 8 eingesetzt, wobei die Abstandhalter 25.1 bis 25.3 eine gute und exakte Zentrierung des Düsenkörpers in der Düsenhülse vornehmen.

Beim Einsetzen der Düsenanordnung D in den Laserkopf schlägt der Aussenflansch 19 des Düsenkörpers 16 an der Ringkante 20 an, wodurch die gesamte Düsenanordnung D zentriert und gehalten wird.

Beim Laserstrahlschneiden wird Schneidgas über eine Einlass-öffnung 26 in der Traghülse 1 in einen Ringkanal 27 zwischen Traghülse 1 und Innenhülse 2 eingebracht. Dieses Schutzgas strömt dann weiter aus dem Ringkanal 27 in einen Kanalabschnitt 28, der zwischen der Innenfläche 13 der Düsenhülse 8 und der Innenhülse 2 ausgebildet wird. Danach erfolgt ein Übergang des Gases in einem sich zum Ringspalt hin verjüngenden Spaltabschnitt 29, in dessen Bereich auch die Ausnehmungen 21 liegen. Diese dienen zur Montage des Düsenkörpers 7.

Das Gas strömt nun in den Ringspalt ein, wobei durch die ständige Verjüngung von Ringkanal zum Ringspalt hin eine erhebliche Beschleunigung der Gasgeschwindigkeit erfolgt. Durch die Engstelle 24 in dem Ringspalt erfolgt nochmals eine wesentliche Erhöhung der Gasgeschwindigkeit, wobei sich das Gas nach der Engstelle in dem sich wieder erweiternden Ringspalt entspannen kann. Durch die Engstelle 24 ist in dem Ringspalt ein Venturieffekt erzielt.

Das Gas tritt mit sehr hoher Geschwindigkeit aus der Ringöffnung 14 aus und trifft auf das nicht näher gezeigte, zu bearbeitende Werkstück. Dort wird durch das Gas eine Schneidfuge ausgeblasen, gekühlt und Sauerstoffzufuhr unterbunden, so dass bspw. bei einer Metallbearbeitung das Metall nicht oxidiert. Dieser ist als Ringstrahl ausgebildet.

## Patentansprüche

1. Düsenanordnung für das Laserstrahlschneiden mit einem einen fokussierten Laserstrahl umgebenden Düsenkörper (7) mit einer Durchlassöffnung (14) für den Laserstrahl und mit einer den Düsenkörper (7) umgebenden Düsenhülse (8), die mit dem Düsenkörper (7) einen Ringspalt ausbildet, der einerseits einen Einlass für ein Gas und andererseits eine der Durchlassöffnungen (15) zugeordnete Ringöffnung (14) aufweist,
dadurch gekennzeichnet,
dass im Ringspalt eine düsenartige Engstelle (24) vorgesehen ist, wobei die Breite (b₁, b₂) des Ringspalts vor und nach der Engstelle (24) erhöht ist.

2. Düsenanordnung nach Anspruch 1, dadurch gekennzeichnet, dass die Engstelle (24) ringförmig ausgestaltet ist.

3. Düsenanordnung nach Anspruch 1 oder 2, dadurch gekennzeichnet, dass auf einer Innenfläche (22) der Düsenhülse (8) und/oder einer Aussenfläche (18) des Düsenkörpers (7) eine wallartige Erhebung (24) ausgebildet ist.

4. Düsenanordnung nach wenigstens einem der Ansprüche 1 bis 3, dadurch gekennzeichnet, dass in dem Ringspalt rippenförmige Abstandshalter (25.1 bis 25.2) angeordnet sind.

5. Düsenanordnung nach Anspruch 4, dadurch gekennzeichnet, dass die Abstandshalter (25.1 bis 25.3) einstückig der Aussenfläche (18) des Düsenkörpers (7) und/oder der Innenfläche (22) der Düsenhülse (8) angeformt sind.

6. Düsenanordnung nach wenigstens einem der Ansprüche 1 bis 5, dadurch gekennzeichnet, dass die Düsenhülse (8) mittels einer Überwurfmutter (11) an einem Laserkopf festgelegt ist.

## Claims

1. Nozzle arrangement for laser beam cutting, having a nozzle body (7), which surrounds a focussed laser beam, a through-aperture (14*) for the laser beam, and a node sleeve (8), which surrounds the nozzle body (7) and forms, with the nozzle body (7), an annular gap which has an inlet for a gas on one side and an annular opening (14), associated with the through-apertures (15), on the other side, characterised in that a nozzle-like constriction (24) is provided in the annular gap, the width (b₁, b₂) of the annular gap being increased before and after the constriction (24).

2. Nozzle arrangement according to claim 1, characterised in that the constriction (24) has an annular configuration.

3. Nozzle arrangement according to claim 1 or 2, characterised in that a barrier-like raised portion (24) is formed on an internal face (22) of the nozzle sleeve (8) and/or on an external face (18) of the nozzle body (7).

4. Nozzle arrangement according to at least one of claims 1 to 3, characterised in that rib-shaped spacer members (25.1 to 25.2**) are disposed in the annular gap.

5. Nozzle arrangement according to claim 4, characterised in that the spacer members (25.1 to 25.3) are formed integrally with the external face (18) of the nozzle body (7) and/or with the internal face (22) of the nozzle sleeve (8).

6. Nozzle arrangement according to at least one of claims 1 to 5, characterised in that the nozzle sleeve (8) is secured on a laser head by means of a retaining nut (11).

## Revendications

1. Dispositif de buse pour la découpe par faisceau laser, comprenant un corps de buse (7) entourant un faisceau laser focalisé, et ayant un orifice de passage (14) pour le faisceau laser ainsi qu'un manchon de buse (8) entourant le corps de buse (7), ce manchon formant un intervalle annulaire avec le corps de buse (7), cet intervalle ayant d'une part une entrée pour du gaz et d'autre part une ouverture annulaire (14) associée aux orifices de passage (15),
caractérisé en ce que
dans l'intervalle annulaire on a un point étroit (24) en forme de buse, et la largeur (b₁, b₂) de l'intervalle annulaire, en amont et en aval du point d'étranglement (24), va en augmentant.

2. Dispositif de buse selon la revendication 1,
caractérisé en ce que
le point étroit (24) est de forme annulaire.

3. Dispositif de buse selon la revendication 1 ou 2,
caractérisé en ce qu'
un bossage en forme de paroi (24) est réalisé sur la surface intérieure (22) du manchon de buse (8) et/ou sur la surface extérieure (18) du corps de buse (7).

4. Dispositif de buse selon au moins l'une quelconque des revendications 1 à 3,
caractérisé par
des organes d'écartement (25.1-25.3) en forme de nervures réalisées dans l'intervalle annulaire.

5. Dispositif de buse selon la revendication 4,
caractérisé en ce que
les organes d'écartement (25.1-25.3) font corps avec la surface extérieure (18) du corps de buse (7) et/ou la surface intérieure (22) du manchon de buse (8).

6. Dispositif de buse selon au moins l'une quelconque des revendications 1 à 5,
caractérisé en ce que
le manchon de buse (8) est fixé sur la tête de laser à l'aide d'un écrou chapeau (11).
